# EUROPEAN PATENT SPECIFICATION

(11) **EP 3 348 487 B1**
(45) Date of publication and mention of the grant of the patent: **29.04.2020**
(21) Application number: 17151009.2
(22) Date of filing: 11.01.2017
(51) Int. Cl.: B65D 25/20, B65D 75/54, B65D 85/10

(54) **SYSTEM COMPRISING A CONTAINER AND A SUPPLEMENTAL PRODUCT**
SYSTEM MIT EINEM BEHÄLTER UND EINEM ERGÄNZENDEN PRODUKT
SYSTÈME COMPRENANT UN CONTENANT ET UN PRODUIT COMPLÉMENTAIRE

(43) Date of publication of application: 18.07.2018
(73) Proprietor: Reemtsma Cigarettenfabriken GmbH, 22761 Hamburg (DE)
(72) Inventor: Jepsen, Kim, 22761 Hamburg (DE)
(74) Representative: Gulde & Partner

(56) References cited:
- EP-A1- 2 087 991
- EP-A1- 3 048 147
- WO-A1-01/22839
- WO-A1-2015/011621
- WO-A1-2015/082386
- DE-U1- 8 513 428
- DE-U1-202006 006 722
- FR-A1- 2 706 418
- GB-A- 2 194 767
- US-A- 4 061 820
- US-A- 4 103 821
- US-A- 6 048 100
- US-A1- 2010 018 883
- US-A1- 2014 079 343
- US-A1- 2015 131 926
- US-B1- 6 682 798

## Description

### FIELD OF THE INVENTION

The present invention relates to a system of a container and a supplemental product configured for being connected via a selective adhesive connection. The present invention further relates to a container with a selective adhesive connection, particularly to a container for a tobacco related product with selective adhesive connection.

### BACKGROUND

Various packages for tobacco, smoking articles, like cigarettes, cigarillos or cigars, and tobacco based products, like snus or snuff, are well known in the art.

Elongated smoking articles such as cigarettes may be packed in hinge-lid packs comprising a box with a hinged lid. Therein the elongated smoking articles are contained in the interior of the box. Usually an inner liner is provided within the box in order to protect the elongated smoking articles against loss of moisture, freshness and aroma. The lid comprises a hinged connection to the box and is transferable from an open position to a closed position, wherein a user can access the smoking articles merely in the open position. In order to prevent unwanted openings, the lid may be attached to the box or the inner liner via an adhesive.

Elongated smoking articles may also be packed in a soft cup package, wherein a soft cup packages typically comprise a soft cup formed of a cup-shaped outer paper container that is open at the top to receive an inner liner comprising the tobacco products. In order to access the smoking articles at least one wall of the inner liner needs to be opened. The package may comprise an adhesive label for resealing the opened wall in order to provide a closed configuration that safely keeps the smoking articles within the package.

Tobacco may be packed in pouches that are formed from an elastic sheet folded to form a pocket between two adjacent walls of the elastic sheet. One of the walls may continuously extend to form a flap for closing the pocket by overlapping the flap with an outer surface of one of the adjacent walls. While the adjacent walls may be partially hot embossed for enclosing the pocket, the flap may comprise an adhesive label for resealing the pouch.

Tobacco based products such as snus or snuff may be packed in a can comprising a base portion and a top portion that together define a resealable compartment for storing the tobacco based product. An additional compartment, e.g. a waste compartment, may be defined between the top portion and a cover. Various connection types may be used for attaching base portion and top portion or top portion and cover, e.g. screw connections, snap locks, pressure fits, hinged connections, sliding covers or non-permanent, reusable adhesives.

For each of the above mentioned types of containers for tobacco, smoking articles or tobacco based products the use of an adhesive closure poses various problems. In an open position of the adhesive closure tobacco, dust, grease or general debris can be deposited on the adhesive closure and hence reduce its adhesive strength. Once an adhesive closure is released from an initial position, an adhesive portion can be adhered to any other surface of the container. This might lead to irritation on the side of the customer and/or to aesthetically less appealing configurations of the container. If the closure is provided with an adhesive label, it may detach from the container and be lost or become dysfunctional.

EP 3 048 147 A1 discloses a flexible pouch for a tobacco-related product having a closure system based on two low tack pressure sensitive adhesive layers that are configured to be adjacent to each other when the package is closed. US 4,061,820 A discloses an open cell foamed structure to which an adhesive is applied in a state where the cells are compressed to a flat state. Without the pressure, the cells return to the original volume and are generally non-tacky whereas they adhere to each other if compressed again with sufficient pressure. US 2015/0131926 A1, DE 20 2006 006 722 U1 and WO 01/22839 A1 disclose closure systems based on mechanically interlocking systems, such as e.g., hook-and-loop systems.

It is thus an object of the present invention to overcome or reduce at least some of the disadvantageous of the prior art and to provide a container with an adhesive connection that allows for securely resealing the container multiple times and provides further advantages.

### SUMMARY OF INVENTION

One or more of the drawbacks of the prior art could be avoided or at least reduced by means of the present invention that solves the abovementioned objective.

A first aspect of the present invention relates to a system comprising a container for a tobacco related product and a supplemental product. Therein the container for a tobacco related product comprises at least one storage compartment for storing the tobacco related product, at least one closure element for providing controlled access to the storage compartment and one of a first adhesive element and a second adhesive element. The supplemental product of the system according to the invention comprises the other one of the first adhesive element and the second adhesive element. According to the invention, the first adhesive element comprises an adhesive layer and a cover layer disposed on the adhesive layer and configured for lowering the adhesive strength of the adhesive layer such that the first adhesive element is generally non-tacky. The second adhesive element comprises a release layer and the first adhesive element is configured for specifically adhering to the release layer of a second adhesive element.

According to a particularly preferred embodiment, the container is a tobacco pouch, e.g. a tobacco pouch as described above, and the supplemental product is a cigarette paper booklet. Various designs of cigarette paper booklets as well as of closures of cigarette paper booklets are known from the prior art. By utilizing the selective adhesive connection, a manufacturer or vendor of tobacco filled pouches can preselect cigarette paper booklets that can be attached to the tobacco pouch, while other cigarette paper booklets cannot be attached to the pouch. In doing so, the manufacturer or vendor can recommend certain cigarette papers that might be produced by the manufacturer or vendor of the tobacco filled pouches or from a contracted manufacturer. The preselected cigarette papers may ensure an optimal smoking experience when used together with the tobacco from the pouch. Hence, particularly preferred, the size and paper weight of the cigarette paper contained in the cigarette paper booklet is preselected with respect to a tobacco stored in the tobacco pouch.

According to an alternatively preferred embodiment, the container is one of a hinge-lid pack for elongated smoking articles and a soft pack for elongated smoking articles and the supplemental product is one of a lighter and a matchbook. According to this embodiment, the selective adhesive connection may be utilized for marketing purposes, i.e. to hand out a matchbook with each sold pack of elongated smoking articles. If the match book is empty or lost before the elongated smoking articles are used up, the selective adhesive connection will not attract dirt, dust or general debris and thus may not deteriorate the appearance of the pack. The selective adhesive connection further prevents that the matchbook or lighter preselected from the manufacturer or vendor of the packs for elongated smoking articles is replaced with another matchbook or lighter, e.g. by a retailer of the packs.

According to a further preferred embodiment, the container is a can for a tobacco based product, e.g. snus or snuff, and the supplemental product comprises a temperature indicator configured for undergoing a visible color change in a temperature range between 0°C and 10°C. In other words, the color of temperature indicator changes if its temperature comes across a temperature between 0°C and 10°C and can hence provide information on an actual cooling status of the container. The temperature indicator thus allows for indicating a preferred consumption condition of the tobacco related product inside the container, i.e. whether the tobacco related product itself is in a cooled condition that is suitable for consumption. The temperature indicator preferably comprises thermochromic pigments. The manufacturing costs for the temperature indicator might be high and the selective adhesive connection may provide reusability of the temperature indicator and thus reduce costs for producing the temperature indicator.

Further preferred, in the system according to the invention, the container is one of a hinge-lid pack for elongated smoking articles, a soft pack for elongated smoking articles, a pouch for tobacco and a can for a tobacco based product and the supplemental product is a booklet comprising information for a customer. The booklet may comprise information on the product contained in the container or information on marketing related topics, such as raffles, special promotion offers and the like. The booklet may be a folded booklet, wherein different segments of the folded booklet may be attached to each other via an adhesive connection that is tacky while the segments contact each other and that is non-tacky while the segments are separated from each other.

Another aspect of the present invention relates to a container for a tobacco related product, preferably for one of the tobacco related products as described above, such as elongated smoking articles, tobacco or tobacco based products. The container comprises at least one storage compartment for storing the tobacco related product, wherein the specific configuration of the storage compartment depends on the kind of tobacco related product. The container further comprises at least one closure element for providing controlled access to the storage compartment. The closure element is preferably configured for being transferred from a first position into a second position, wherein the first position corresponds to an open configuration of the container and wherein the second position corresponds to a closed configuration of the container. The specific configuration of the closure element depends on the type of container and thus on the kind of tobacco related product.

According to the present invention, the container comprises at least the first adhesive element comprising an adhesive layer and a cover layer disposed on the adhesive layer and may further comprise a second adhesive element comprising a release layer. The adhesive layer comprises a second main surface and a first main surface opposite the second main surface, wherein the cover layer is disposed on the adhesive layer's first main surface, preferably on its entire first main surface. The cover layer is configured for lowering the adhesive strength of the adhesive layer such that the first adhesive element is generally non-tacky. In other words, the cover layer deactivates the adhesive layer such that the adhesive layer does not unspecifically adhere to any surface anymore.

Preferably, the adhesive layer comprises a permanent tacky adhesive, e.g. a polyurethane based adhesive, an acrylic adhesive or any other kind of rubber based adhesive. Preferably, the adhesive layer comprises an initial tack of at least 10 N/25 mm, preferably of at least 15 N/25 mm, further preferred of at least 20 N/25 mm and also preferred of at least 25 N/25 mm. The adhesive layer preferably comprises a peel adhesion at 90°C of at least 6 N/25 mm, further preferred of at least 10 N/25 mm and also preferred of at least 12 N/25 mm. The adhesive layer preferably comprises high tack and adhesion on a wide variety of suitable container materials, e.g. of plastic, metal, paper or cardboard, including apolar, slightly rough and curved surfaces.

The cover layer is configured for lowering the strength of the adhesive layer. In other words, the cover layer passivates the adhesive layer to a certain extent such that the combination of adhesive layer and cover layer is generally non-tacky. Therein, non-tacky refers to the property that the covered adhesive layer does not adhere to a wide variety of surfaces. Particularly preferred, the covered adhesive layer does not adhere to tobacco, dust, general debris or any other kind of unspecific surfaces. The adhesive layer alone might unspecifically adhere to any or at least most surfaces.

According to the present invention, the first adhesive element, i.e. the covered adhesive layer, is configured for specifically adhering to a release layer of a second adhesive element. Preferably, the covered adhesive layer solely adheres to a specific release layer of a second adhesive element. Particularly preferred, a first main surface of the cover layer is configured to adhere to a specific release layer of a second adhesive element, wherein a second main surface opposite the first main surface of the cover layer is attached to the adhesive layer of the first adhesive element.

The specific adhesion is an inherent property of the first adhesive element that becomes apparent when contacting the first adhesive element with a release layer of a second adhesive element. In the context of the present invention, the release layer may be a release varnish, such as a UV curable release varnish. Such release varnishes are well known from the prior art, particularly with respect to printing processes and combine high adhesion with high release properties. The release layer may comprise a wax based system, a carbamate system, chrome complexes, Teflon compounds, release modified varnishes and/or silicone based release systems. Further preferred, the release layer comprises a low surface energy, and further comprises a smooth and even surface. Further preferred, the release layer comprises minimal concentrations of cationic and free radicals. Without being bound to any theory, the selective adhesion between the passivated adhesive layer, i.e. the combination of adhesive layer and cover layer, and the release layer is considered to be based on the increased contact area between cover layer and release layer and on the decreased concentration of cationics and free radicals within the release layer. Hence, the release layer activates the adhesive layer deactivated by the cover layer. Hence, the release layer can be considered to function as an activation layer with respect to the first adhesive element. In other words, the first adhesive element and the second adhesive element according to the invention realized a specific adhesive connection in a key-lock-principle.

Particularly preferred, the release layer is based on a polydimethylsiloxane (PDMS) resin that is functionalized with polymerizable acrylate or epoxy groups. In other words, the release layer may comprise a silicone acrylate and/or an epoxy silicone. Further preferred, UV curing, free radical curing and/or cationic curing may be used in providing the release layer. Photo-induced, e.g. UV induced, free-radical polymerization of acrylate-functional silicones may be used for providing a release layer. Suitable release layers are exemplarily disclosed in US 4,306,050 B; US 4,348,454 B; US 4,293,678 B and US 4,279,717 B. Further preferred, the release layer may comprise cationically cureable vinylether functionalized silicones.

Further preferred, the adhesive layer comprises a silicone adhesive, i.e. a silicone based adhesive. Advantageously, a high elasticity of the first adhesive element is ensured by using silicone adhesives, even at low temperatures. Further, silicone adhesives have high temperature stability, are nearly inert to chemicals and have excellent resistance to moisture and weathering. Hence, the adhesive layer and the selective adhesive connection stay functional even during prolonged use and in changing environments. However, the adhesive layer may also comprise a polyurethane based adhesive, a polyacrylat based adhesive or any other self-adhesive resin.

The cover layer preferably comprises a polymer based varnish. The polymer based varnish may comprise an acrylic varnish, a polyethylene varnish, a polyester varnish and/or a polypropylene varnish. Particularly preferred, the cover layer comprises a polypropylene film, e.g. a bi-axially oriented polypropylene film. The cover layer may be opaque, e.g. white, or may be a transparent cover layer.

According to a preferred embodiment of the present invention, at least one of the first adhesive element and the second adhesive element comprises a base layer with a first main surface and a second main surface opposite to the first main surface, wherein a permanent adhesive is disposed on the second main surface and wherein one of the adhesive layer and the release layer is disposed on the first main surface. Therein, the base layer may comprise a paper, cardboard, plastic sheet and/or foil and may be sufficient rigid for supporting at least the adhesive layer and the cover layer in the case of the first adhesive element or at least the release layer in the case of the second adhesive element. The permanent adhesive disposed on the second main surface is configured for attaching the base layer to a surface, e.g. of the container, and may be covered with a liner that must be removed in order to attach the base layer to a surface, e.g. of a container. The base layer may be formed of a polymer or a mixture of polymers. Preferably, the base layer is formed of a polymer selected from polyethylene (PE), metallized polyethylene terephthalate (MPET), polypropylene (PP), cast polypropylene (CPP), oriented polypropylene (OPP), biaxially oriented polypropylene (BOPP) or combinations thereof.

By comprising a base layer with a permanent adhesive on its second main surface, at least one of the first adhesive element and the second adhesive element is configured as attachable label, sticker or the like and is hence attachable to a container for a tobacco related product. In a preferred embodiment, the first adhesive element is attached to the container as label. Advantageously, such a first adhesive element can be attached to a variety of containers and hence existing containers are easily upgraded with the selective adhesive connection. According to this preferred embodiment, the second adhesive element is also attachable to the container or to a supplemental product as a label.

According to an alternative embodiment, at least one of the first adhesive element and the second adhesive element is an integral part of the container. Further preferred, the first adhesive element comprises a base layer with a first main surface and a second main surface, wherein the adhesive layer and the cover layer are disposed on the first main surface. Therein, the base layer is an integral part of the container. In a container for elongated smoking articles, the base layer may comprise paper or cardboard. In a pouch for tobacco, the base layer may comprise an elastic sheet. For a can for a tobacco based product, the base layer may comprise a plastic layer. No permanent adhesive may be disposed on the second main surface of the first adhesive element. A second adhesive element may also be an integral part of a container for a tobacco related product and comprise a base layer and a release layer disposed on a first main surface of the base layer without a permanent adhesive on the second main surface of the base layer. The second adhesive element may also be an integral part of a supplemental product.

According to a further preferred embodiment, the container according to the invention is one of a hinge-lid pack for elongated smoking articles, a soft pack for elongated smoking articles, a pouch for tobacco and a can for a tobacco based product.

A hinge-lid pack for elongated smoking articles according to an embodiment of the invention comprises an outer box with a lid. The outer box preferably comprises a bottom wall, a front wall, a back wall and one or more side walls, wherein the walls define an interior space configured to house the elongated smoking articles. The smoking articles may be stored directly within the interior space or may be wrapped within an inner liner and then stored in the interior space. Further preferred, the elongated smoking articles are stored in an inner sealed block. In a cross-sectional view, the box can have a polygonal shape, preferably the box has a quadrangular, hexagonal or octagonal shape, wherein one or more corner regions may be rounded or beveled. The lid is connected to the box by means of a hinge line. Preferably, the lid is connected to the remaining body of the box at a back wall of the box. In use, the lid is pivoted about the hinge line to open and close the outer box and to allow access to the interior space within the box. The box can be made from a sheet-like material like e.g. paper or cardboard. Preferably, the box is formed from a single first blank of the sheet-like material. The base layer of at least one of the first and second adhesive element is preferably a part of the box. Alternatively, at least one of the first and second adhesive element is configured as attachable label and attached to an outer wall of the box.

A soft pack for elongated smoking articles or a cup package according to a preferred embodiment comprises a cup-shaped outer container with opposing front and back walls, a bottom wall and two side walls. Usually, the front and back walls represent opposing wide walls, whereas the side walls represent opposing narrow walls of the outer container. The width of the front and back walls is defined by the distance between opposing side walls of the outer container, whereas the width of the side walls is defined by the distance between opposing front and back walls. The walls define an opening and the storage compartment for storing the tobacco related product. Further preferred, the storage compartment of the outer cup is storing an inner liner which wraps the tobacco products. The cup-shaped outer container lacks a top wall, thereby defining an opening which allows access to the cavity build by the other walls of the outer container. Preferably, the outer container has a cuboid shape with an opening at the top. Usually, the walls of the outer container are formed of paper or carton. Preferably, paper or carton with a weight of 5 to 200 g/m2, more preferably with a weight of 7 to 150 g/m2, more preferably with a weight of 80 to 150 g/m2 is used. The base layer of at least one of the first and second adhesive element may be a part of the wall of the outer container. Alternatively, at least one of the first and second adhesive element is configured as attachable label and attached to an outer wall of the container.

In a further preferred embodiment, the container is one of a hinge-lid pack and a soft pack for elongated smoking articles, wherein the container comprises an inner liner disposed within the container, and wherein at least one of the first adhesive element and the second adhesive element is attached to or integral to the inner liner. According to this embodiment, a closure element of the container, e.g. a hinged lid, may comprise an initial closed position, wherein it is attached to the box or an outer wall of the container. After a first opening of the hinged lid, one of a first and second adhesive element on the closure element can be brought into contact with the other one of the first and second adhesive element on or within the inner liner for resealing the container for elongated smoking articles. Also preferred, one of the first adhesive element and the second adhesive element is attached to or integral to the closure element. However, an adhesive element integrated in the closure element may also be configured for interacting with another adhesive element on an outer surface of the container or the box. In an initial closed position, the adhesive elements may be covered with liners until a first opening of the closure element and then the liners may be removed from the adhesive elements. Particularly preferred, the inner liner is formed from a flexible sheet material which can be wrapped around a group of elongated smoking articles. Preferably, the flexible sheet material is aroma-tight, moisture-tight and may be thermally sealable. The flexible sheet material comprises one or more layers of a flexible material like e.g. a foil or a film. Preferably, the flexible sheet material comprises one layer, at least two layers or multiple layers of a flexible material like e.g. a foil or a film or combinations thereof.

A pouch for tobacco according to a preferred embodiment of the invention comprises at least one wall which is at least in part formed of a flexible sheet laminate. There are several types of pouches for tobacco known in the art. There are pouches known where the first pocket is formed only of a front and a back wall, like e.g. in a rolled pouch. Alternatively, the first pocket may be formed of a front wall, a back wall and a bottom wall as well as optionally one or more side walls, like e.g. in a block pouch, block-bottom pouch or stand-up pouch. Optionally, the pouch may comprise a flap which can be regarded as part of the front, back or side wall or which may be provided as separate wall of the pouch. The selective adhesive connection of the present invention is not limited to a certain type of pouch and in principle works with all known pouch architectures provided. Irrespective of the type of pouch, the pouch of the invention can be manufactured from one single piece of flexible sheet material, e.g. of flexible sheet laminate, or from more than one piece of flexible sheet material.

Preferably, the pouch comprises of a front wall and a back wall and optionally a flap. The pouch may further comprise a bottom wall and optionally one or more side walls to form the pocket of the pouch. Preferably, the pouch comprises a front wall and a back wall opposed to each other and optionally a bottom wall, one or more side walls and/or a flap, wherein at least a part of one of the front wall, the back wall, the bottom wall, the side wall and the flap is formed of the flexible sheet laminate. At least one of the first adhesive element and the second adhesive element according to the invention is preferably an integral part of or attached to the outer surface of at least one wall of the pouch. Alternatively, at least one of the first adhesive element and the second adhesive element is attached as an external label to the outer surface of at least one wall of the pouch.

A can for a tobacco based product, e.g. snus or snuff, according to a preferred embodiment of the present invention preferably comprises at least a base portion and a top portion, wherein the base portion and the top portion confine a first closable compartment for storing the tobacco related product, particularly between the base portion and the top portion. In a horizontal cut, the can preferably comprises a circular cross section, an oval cross section or a rectangular cross section. The base portion and the top portion may be connected via at least one of a screw connection, a snap fit, an adhesive connection, a magnetic closure and a hinged connection. At least one of the first adhesive element and the second adhesive element may be an integral part of at least one wall of the base portion or the top portion. Alternatively, at least one of the first adhesive element and the second adhesive element may be attached as label to at least one wall of the base portion or the top portion.

According to a particularly preferred embodiment of the present invention, at least one of the first adhesive element and the second adhesive element is attached or integral to the closure element of the container according to the invention. In other words, the selective adhesive connection between first and second adhesive element is utilized as resealable adhesive connection for closing the container. The selective adhesive connection may be used for providing an initial closure of the container. Alternatively, an initial closure may be provided separately from the selective adhesive connection, e.g. by providing a sealed closure or by providing an initial closure that has to be ruptured to open. Then, the selective adhesive connection may be configured to be used only after an initial opening of the container, e.g. by providing a releasable liner on a first surface of at least one of the first adhesive element and the second adhesive element. Further preferred, at least one of the first and second adhesive element is provided to a user separately from the container and the user can attach the adhesive elements as labels to the container by himself. Then, a releasable liner may be also provided in the second surface of at least one of the first and second adhesive element.

According to a further preferred embodiment, one of the first adhesive element and the second adhesive element constitutes a landing zone for the closure element. Hence, the adhesive element configured as landing zone is configured to contact the other adhesive element in a closed configuration of the closure element that does not allow accessing the interior of the container and the elongated smoking articles. Hence, the landing zone is preferably arranged on an outer wall of the container such that the container can be closed by releasably attaching the closure element to the landing zone.

Another aspect of the present invention relates to a supplemental product for a system according to the invention as described above. Therein, the supplemental product comprises at least the first adhesive element. The supplemental product is thus configured to be specifically attached to a container of the system according to the invention that comprises the second adhesive element. Further, the supplemental product according to the invention may comprise the first adhesive element and the second adhesive element. In other words, the supplemental product may comprise a closure based on the specific adhesive connection between the first adhesive element and the second adhesive element.

### BRIEF DESCRIPTION OF DRAWINGS

Further features of the invention will become apparent to those of ordinary skill in the art by describing in detail exemplary embodiments with reference to the attached drawings, wherein:
- Figure 1: illustrates a first adhesive element attached to a container and a second adhesive element attached to a supplemental product;
- Figure 2: illustrates a hinged-lid pack for elongated smoking articles;
- Figure 3: illustrates a can for a tobacco based product;
- Figure 4: illustrates an elastic sheet for a tobacco pouch; and
- Figure 5: illustrates a cigarette paper booklet as supplemental product according to an embodiment.

### DETAILLED DESCRIPTION OF EXAMPLE EMBODIEMENTS

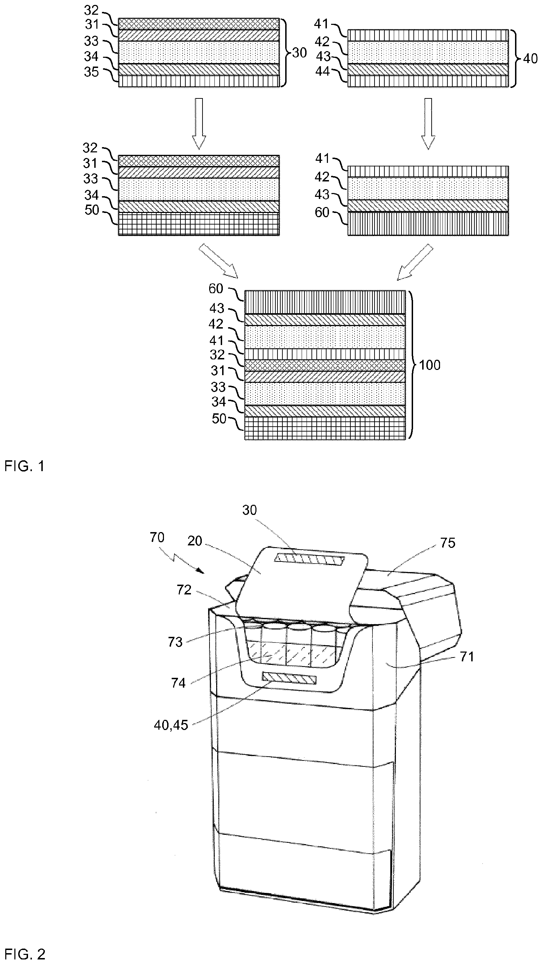

Figure 1 illustrates a first adhesive element 30 and a second adhesive element 40.

The first adhesive element 30 comprises a base layer 33 that is formed from a polypropylene elastic foil and that comprises a first main surface facing upward and a second main surface opposite to the first main surface and facing downward.

An adhesive layer 31 consisting of a general permanent rubber based adhesive is disposed on the first main surface of the base layer 33 and preferably covers the whole first main surface of the base layer 33. The adhesive layer 31 comprises a second main surface facing the base layer 34 and a first main surface opposite the second main surface. The adhesive layer 31 comprises a permanent and tacky adhesive.

A cover layer 32 made from a transparent gloss varnish is disposed on the first main surface of the adhesive layer 31 and preferably covers the whole first main surface of the adhesive layer 31. The cover layer 32 comprises a second main surface facing the adhesive layer 31 and a first main surface facing opposite to the second main surface. The cover layer 32 lowers the adhesive strength of the underneath adhesive layer 31 such that the combination of the adhesive layer 31 and the cover layer 32 is not tacky. Particularly, the first main surface of the cover layer 32 is non-tacky, i.e. tobacco, dust or general debris do not attach to the first main surface of the cover layer 32. Further preferred, the first main surface of the cover layer 32 does not adhere to unspecific surfaces but is configured to specifically adhere to a release layer 41 of a second adhesive element of a second adhesive element 40.

A permanent adhesive layer 34 is disposed on the second main surface of the base layer 33.The permanent adhesive layer 34 provides sufficient adhesive strength such that the first adhesive element 30, particularly a first surface of the permanent adhesive layer 34 facing away from the base layer 33, can be attached to nearly any surface. The permanent adhesive layer 34 may comprise a silicone based adhesive, preferably a pressure sensitive adhesive (PSA). In order to prevent any unwanted adhesion between the permanent adhesive layer 34 and an arbitrary surface, a release liner 35 is attached to the permanent adhesive layer 34. Particularly, the release liner 35 is attached to the second surface of the permanent adhesive layer 34.

In order to attach the first adhesive element 30 to a suitable surface, the release liner 35 is removed from the permanent adhesive layer 34 and a second surface of the permanent adhesive layer 34 is attached to the suitable surface. As shown in Figure 1, the permanent adhesive layer 34 of the first adhesive element 30 is attached to a container for a tobacco related product 50.

The second adhesive element 40 also comprises a base layer 42 that is formed from a polypropylene elastic foil and that comprises a first main surface facing upward and a second main surface opposite to the first main surface and facing downward. A release layer 41 is disposed on the first main surface of the base layer 42. The release layer 41 preferably consists of polydimethylsiloxane (PDMS) resin that is functionalized with a polymerizable acrylate and thus comprises a low surface energy and a smooth and even surface. A permanent adhesive layer 43 is disposed on a second surface of the base layer 42. The permanent adhesive layer 43 may be identical to the permanent adhesive layer 34 of the first adhesive element 30. A release liner 44 is attached to a second main surface of the permanent adhesive layer 43 in order to prevent unwanted adhesion between the permanent adhesive layer 43 and any surface.

In order to attach the second adhesive element 40 to a suitable surface, the release liner 44 is removed from the permanent adhesive layer 43 and a second surface of the permanent adhesive layer 43 is attached to the suitable surface. As shown in Figure 1, the permanent adhesive layer 43 of the second adhesive element 40 is attached to supplemental product 60.

As the first adhesive element 30, particularly the combination of adhesive layer 31 and cover layer 32, is configured to specifically adhere to the release layer 41 of the second adhesive element 40, the first adhesive element 30 connected to container 50 and the second adhesive element 40 connected to supplemental product 60 can be adhered to each other and hence form the system 100. Therein, the first main surface of the cover layer 32 is brought into close contact with the release layer 41 of the second adhesive element 40. Preferably, pressure is exerted onto the boundary surface between the first and second adhesive element 30, 40 by pressing the adhesive elements 30, 40 together.

Figure 2 illustrates a hinged-lid pack 70 for elongated smoking articles 73 comprising an outer box 71. The outer box 71 comprises a bottom wall, a front wall, a back wall and one or more side walls that together define an interior space configured to house the elongated smoking articles 73. The lid 75 is connected to the outer 71 box by means of a hinge line. The lid 75 is connected to the remaining body of the box 71 at a back wall of the box 71. In use, the lid 75 is pivoted about the hinge line to open and close the outer box 71 and to allow access to the interior space within the box 71. A top wall of the outer box 71 is solely formed by an upper wall of the lid 75. In a cross-sectional view, the box 71 has a quadrangular shape, with at least two front corner regions being beveled. In an initial closure position, the lid 75 is connected to the outer box 71 by non-permanent adhesive that becomes non-tacky once it is released. After being initially opened, the lid 75 can be attached to the outer box 71 by a form closure between the lid 75 and the box 71. The box 71 is made from cardboard.

The hinged-lid pack 70 further comprises an inner liner 72 that is wrapped around a plurality of elongated smoking articles 73. Further, an inlet 74 that is comprising information on the elongated smoking articles 73 and/or marketing-related information is disposed between the elongated smoking articles 73 and the inner liner 72. The inner liner 72 comprises a closure element 20 in form of a flap that is transferable from an open to a closed position and vice versa. In the open position the inner liner 72 is accessible and hence an elongated smoking article 73 can be removed from the inner liner 72. In the closed position the flap 20 overlaps with another part of the inner liner 72 that extends over the outer box 71.

A first adhesive element 30 is attached to an inner side of the flap 20 and comprises the structure as shown in Figure 1. Particularly, the permanent adhesive layer 34 is attached to the inner liner 72 such that the cover layer 32 is facing away from the inner liner 72. A second adhesive element 40 is attached to the part of the inner liner 72 that extends over the outer box 71. Particularly, the permanent adhesive layer 43 is attached to the inner liner 72 such that the release layer 41 is facing away from the inner liner 72. The second adhesive element 40 is configured as landing zone 45 for the flap 20, particularly for the first adhesive element 30. In other words, the second adhesive element 40 is positioned such that the first adhesive element 30, i.e. the cover layer 32 of the first adhesive element 30, contacts the second adhesive element 40, i.e. the release layer 41 of the second adhesive element 40, in a closed position of the flap 20. Hence, in the closed position of the flap 20, the first adhesive element 30 specifically adheres to the second adhesive element 40. Hence, the inner liner 72 is resealable and freshness of the elongated smoking articles 73 is maintained for an extended period. In an open position of the flap 20, the first adhesive element 30 comprising the adhesive layer 31 is generally non-tacky and hence tobacco and dust do not adhere to the first adhesive element 30.

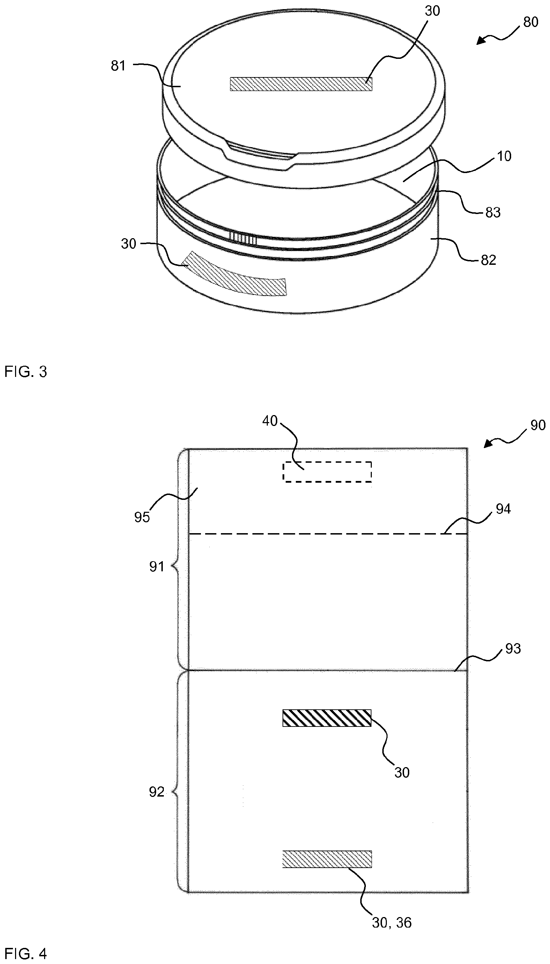

Figure 3 illustrates a can 80 for a tobacco based product and particularly for snus. The can 80 comprises a top portion 81 and a base portion 82 that can be attached to each other via a screw closure 83. If top portion 81 and base portion 82 are attached to each other they enclose the storage compartment 10, wherein the snus is stored. A first adhesive element 30 as illustrated in Figure 1 may be either attached to an upper surface of the top portion 81 or to a side wall of the base portion 82. A supplemental product 60, e.g. a temperature indicator comprising thermochromic pigments, may comprise a second adhesive element 40 that can be attached to the first adhesive element 30.

Figure 4 illustrates an elastic sheet for forming a pouch 90 for tobacco. The pouch 90 can be formed from the elastic sheet by folding the elastic sheet along a folding line 93, thereby dividing the elastic sheet in a first section 91 for forming a first wall and in a second section 92 for forming a second wall. The elastic sheet illustrated in Figure 4 is transferred to a pouch 90 by folding the second section 92 backwards, i.e. into the drawing layer, along the folding line 93. Thus, the lower edge of the second section 92 is brought upwards and into alignment with the opening seam 94 that is indicated in Figure 4. The opening seam 94 is principally a virtual line on the back side of the first segment 91. By hot embossing the first section 91 to the second section 92 along the side edges of the first and second sections 91, 92 up to the opening seam 94 but not along the opening seam 94 a pocket is formed between the first and second wall sections 91, 92, wherein the pocket can be accessed via the opening seam 94. The size and particularly the depth of the pocket depends on the distance between the upper edge of the first wall section 91 and the opening seam 94.

A first adhesion element 30 is integral to a front side of the second section 92. In other words, a part of the second section 92 is forming the base layer 33 as shown in Figure 1 and the adhesive layer 31 and cover layer 21 are disposed on the front side of second section 92, while the permanent adhesive layer 34 is completely omitted. Once the pouch 90 is formed by folding the sections 91, 92 as described above, the first adhesion element 30 is facing backwards. Further, a second adhesion element 40 is integral to a back side of the first section 91 as indicated in Figure 4. In other words, a part of the first section 91 is forming the base layer 42 as shown in Figure 1 and the release layer 41 is disposed on the back side of the first section 91, while the permanent adhesive layer 43 is completely omitted. Hence the second adhesion element 40 is facing backwards before folding the pouch 90.

After the first section 91 and the second section 92 are folded, aligned at opening seam 94 and hot embossed together, a portion 95 of the first section 91 that is above the opening seam 94 functions as closure element for the pouch 90. By folding the flap 95 downwards in a position wherein it overlaps with the second section 92, one can transfer the pouch 90 into a closed configuration. In this configuration, the second adhesive element 40 that is integral with the flap 95 is facing forward. In the closed configuration, the first adhesive element 30 functions as landing zone 36 for the second adhesive element 40. Hence, the adhesive layer 31 of the first adhesive element 30 specifically adheres to the release layer 41 of the second adhesive element 40 in the closed configuration of pouch 90, while in an open configuration of pouch 90 no tobacco or the like adheres to the generally non-tacky first adhesive element 30.

The second section 92 of the pouch 90 comprises a further first adhesive element 30 that is disposed above the first adhesive element 30 described above. The further first adhesion element 30 is also integral to a front side of the second section 92. That is, a part of the second section 92 is forming the base layer 33 of the further first adhesive element 30 as shown in Figure 1 and the adhesive layer 31 and cover layer 21 are disposed on the front side of second section 92, while the permanent adhesive layer 34 is completely omitted.

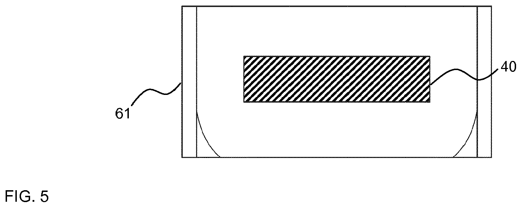

Figure 5 schematically illustrates a cigarette paper booklet 61 as a supplemental product 60 according to the present invention. The cigarette paper booklet 61 may be a so-called double booklet, for instance two stacks of paper sheets are held in a single box. The paper booklet 61 may be made from other materials than paper or cardboard. The cigarette paper booklet 61 may comprise a pouch 62 surrounding the paper booklet 61 and being made from or coated with an at least splash-proof material like polyethylene (PE) or oriented polypropylene (OPP), for example. The overall dimensions of the pouch 62 are adapted to the overall dimensions of the cigarette paper booklet 61, so that the pouch 62 snugly surrounds the paper booklet 61.

The pouch 62 may comprise two slots for the two stacks of paper sheets and may further comprise a lid portion for covering the slots. The lid portion may be configured to be folded around a folding line which extends along a lateral side of the booklet 61.

Figure 5 shows a backside of the cigarette paper booklet 61 with a second adhesive element 40 being attached to the backside of the cigarette paper booklet 61. The second adhesive element 40 may be attached to the backside of the booklet 61 and configured as shown in Figure 1 or may be an integral part of the backside of the booklet 61. The second adhesive element 40 is configured to specifically adhere to the further first adhesive element 30 of the pouch 90 as illustrated in Figure 4. Hence, the cigarette paper booklet 61 can be attached to the pouch 90 of Figure 4 by attaching the second adhesive element 40 to the further first adhesive element 30. Hence, the pouch of Figure 4 uses the selective adhesive connection according to the invention for providing a closure of the pouch 90 and for attaching a cigarette paper booklet 61 as supplemental product 60 to the pouch 90.

## Claims

1. System (100) comprising a container (50) for a tobacco related product and a supplemental product (60),
wherein the container (50) for a tobacco related product, comprises
at least one storage compartment (10) for storing the tobacco related product;
at least one closure element (20) for providing controlled access to the storage compartment (20); and
one of a first adhesive element (30) and a second adhesive element (40),
wherein the supplemental product (60) comprises the other one of the first adhesive element (30) and the second adhesive element (40),
wherein the first adhesive element (30) comprises an adhesive layer (31) and a cover layer (32) disposed on the adhesive layer (32) and configured for lowering the adhesive strength of the adhesive layer (31) such that the first adhesive element (30) is generally non-tacky,
wherein the second adhesive element (40) comprises a release layer (41), and wh
erein the first adhesive element (30) is configured for specifically adhering to the release layer (41) of the second adhesive element (40).

2. System (100) according to claim 1, wherein the container (50) is a tobacco pouch (90) and wherein the supplemental product (60) is a cigarette paper booklet (61).

3. System (100) according to claim 1, wherein the container (50) is one of a hinge-lid pack (70) and a soft pack for elongated smoking articles (73) and wherein the supplemental product (60) is one of a lighter and a matchbook.

4. System (100) according to claim 1, wherein the container (50) is a can (80) for a tobacco based product and where the supplemental product (60) comprises a temperature indicator configured for undergoing a visible color change in a temperature range between 0°C and 10°C for providing information on a preferred consumption condition of the tobacco based product.

5. System (100) according to claim 1, wherein the container (50) is one of a hinge-lid pack (70) for elongated smoking articles (73), a soft pack for elongated smoking articles (70), a can (80) for a tobacco based product, and a pouch (90) for tobacco.

6. System (100) according to any one of the preceding claims, wherein the supplemental product (60) is a booklet comprising information for a customer.

7. System (100) according to any one of the preceding claims, wherein the adhesive layer (31) comprises a silicone adhesive and/or wherein the cover layer (32) comprises a polymer varnish.

8. System (100) according to any one of the preceding claims, wherein at least one of the first adhesive element (30) and the second adhesive element (40) comprises a base layer (33, 42) with a first main surface and a second main surface opposite to the first main surface, wherein a permanent adhesive (34, 43) is disposed on the second main surface and wherein one of the adhesive layer (31) and the release layer (41) is disposed on the first main surface.

9. System (100) according to any one of the preceding claims, wherein at least one of the first adhesive element (30) and the second adhesive element (40) is attached to the container (50).

10. System (100) according to any one of the preceding claims, wherein at least one the first adhesive element (30) and the second adhesive element (40) is an integral part of the container (50).

11. System (100) according to any one of the preceding claims, wherein the container (50) is one of a hinge-lid pack (70) and a soft pack for elongated smoking articles (73), wherein the container (50) comprises an inner liner (72) disposed within the container (50), and wherein at least one of the first adhesive element (30) and the second adhesive element (40) is attached to or integral to the inner liner (72).

12. Container (50) for a system according to any one of the claims 1 to 11, comprising the at least one storage compartment (10) for storing the tobacco related product;
the at least one closure element (20) for providing controlled access to the storage compartment (10); and
the first adhesive element (30) having the adhesive layer (31) and the cover layer (32) disposed on the adhesive layer (31),
wherein the cover layer (32) is configured for lowering the adhesive strength of the adhesive layer (31) such that the first adhesive element (30) is generally non-tacky, and
wherein the first adhesive element (30) is configured for specifically adhering to a release layer (41) of the second adhesive element (40).

13. Container (50) according to claim 12, further comprising the second adhesive element (40), wherein one of the first adhesive element (30) and the second adhesive element (40) is attached to or integral to the closure element (20) and wherein the other one of the first adhesive element (30) and the second adhesive element (40) constitutes a landing zone (45) for the closure element (20).

14. Supplemental product (60) for a system (100) according to any one of the claims 1 to 10, comprising the first adhesive element (30) having the adhesive layer (31) and the cover layer (32) disposed on the adhesive layer (31),
wherein the cover layer (32) is configured for lowering the adhesive strength of the adhesive layer (31) such that the first adhesive element (30) is generally non-tacky, and
wherein the first adhesive element (30) is configured for specifically adhering to a release layer (41) of the second adhesive element (40).

## Patentansprüche

1. System (100), umfassend einen Behälter (50) für ein tabakverwandtes Produkt und ein Zusatzprodukt (60),
wobei der Behälter (50) für ein tabakverwandtes Produkt Folgendes umfasst:
zumindest ein Aufbewahrungsfach (10) zum Aufbewahren des tabakverwandten Produkts;
zumindest ein Verschlusselement (20) zum Bereitstellen eines kontrollierten Zugriffs zum Aufbewahrungsfach (20) und
eines von einem ersten Haftelement (30) und einem zweiten Haftelement (40),
wobei das Zusatzprodukt (60) das andere des ersten Haftelements (30) und des zweiten Haftelements (40) umfasst,
wobei das erste Haftelement (30) eine Haftschicht (31) und eine Deckschicht (32) umfasst, die auf der Haftschicht (32) angeordnet und dazu ausgelegt ist, die Haftfestigkeit der Haftschicht (31) zu senken, sodass das erste Haftelement (30) im Allgemeinen nicht klebrig ist,
wobei das zweite Haftelement (40) eine Ablöseschicht (41) umfasst und
wobei das erste Haftelement (30) dazu gestaltet ist, speziell an der Ablöseschicht (41) des zweiten Haftelements (40) zu haften.

2. System (100) nach Anspruch 1, wobei der Behälter (50) ein Tabakbeutel (90) ist und wobei das Zusatzprodukt (60) ein Zigarettenpapierheft (61) ist.

3. System (100) nach Anspruch 1, wobei der Behälter (50) eine Klappschachtel (70) oder eine Weichverpackung für längliche Rauchartikel (73) ist und wobei das Zusatzprodukt (60) ein Feuerzeug oder ein Streichholzbriefchen ist.

4. System (100) nach Anspruch 1, wobei der Behälter (50) eine Dose (80) für ein Produkt auf Tabakbasis ist und wobei das Zusatzprodukt (60) einen Temperaturindikator umfasst, der dazu gestaltet ist, in einem Temperaturbereich von 0 °C bis 10 °C eine sichtbare Farbänderung zu erfahren, um Informationen über einen bevorzugten Verbrauchszustand des Produkts auf Tabakbasis bereitzustellen.

5. System (100) nach Anspruch 1, wobei der Behälter (50) entweder eine Klappschachtel (70) für längliche Rauchartikel (73), eine Weichverpackung für längliche Rauchartikel (70), eine Dose (80) für ein Produkt auf Tabakbasis oder ein Tabakbeutel (90) ist.

6. System (100) nach einem der vorangehenden Ansprüche, wobei das Zusatzprodukt (60) ein Heft mit Informationen für einen Kunden ist.

7. System (100) nach einem der vorangehenden Ansprüche, wobei die Haftschicht (31) einen Silikonklebstoff umfasst und/oder wobei die Deckschicht (32) einen Polymerlack umfasst.

8. System (100) nach einem der vorangehenden Ansprüche, wobei zumindest das erste Haftelement (30) und/oder das zweite Haftelement (40) eine Basisschicht (33, 42) mit einer ersten Hauptfläche und einer der ersten Hauptfläche gegenüberliegenden zweiten Hauptfläche umfassen, wobei auf der zweiten Hauptfläche ein Dauerkleber (34, 43) angeordnet ist und wobei auf der ersten Hauptfläche entweder die Haftschicht (31) oder die Ablöseschicht (41) angeordnet ist.

9. System (100) nach einem der vorangehenden Ansprüche, wobei zumindest das erste Haftelement (30) und/oder das zweite Haftelement (40) am Behälter (50) befestigt sind.

10. System (100) nach einem der vorangehenden Ansprüche, wobei zumindest das erste Haftelement (30) und/oder das zweite Haftelement (40) ein integraler Bestandteil des Behälters (50) sind.

11. System (100) nach einem der vorangehenden Ansprüche, wobei der Behälter (50) entweder eine Klappschachtel (70) oder eine Weichverpackung für längliche Rauchartikel (73) ist, wobei der Behälter (50) eine innere Auskleidung (72) umfasst, die innerhalb des Behälters (50) angeordnet ist, und wobei zumindest das erste Haftelement (30) und/oder das zweite Haftelement (40) an der inneren Auskleidung (72) befestigt oder integral mit dieser ausgebildet sind.

12. Behälter (50) für ein System nach einem der Ansprüche 1 bis 11, umfassend das zumindest eine Aufbewahrungsfach (10) zum Aufbewahren des tabakverwandten Produkts;
das zumindest eine Verschlusselement (20) zum Bereitstellen eines kontrollierten Zugriffs zum Aufbewahrungsfach (10) und
das erste Haftelement (30) mit der Haftschicht (31) und der auf der Haftschicht (31) angeordneten Deckschicht (32),
wobei die Deckschicht (32) dazu gestaltet ist, die Haftfestigkeit der Haftschicht (31) zu senken, so dass das erste Haftelement (30) im Allgemeinen nicht klebrig ist, und
wobei das erste Haftelement (30) dazu gestaltet ist, speziell an einer Ablöseschicht (41) des zweiten Haftelements (40) zu haften.

13. Behälter (50) nach Anspruch 12,
ferner umfassend das zweite Haftelement (40),
wobei eines des ersten Haftelements (30) und des zweiten Haftelements (40) am Verschlusselement (20) befestigt oder integral mit diesem ausgebildet ist und wobei das andere des ersten Haftelements (30) und des zweiten Haftelements (40) einen Auflagebereich (45) für das Verschlusselement (20) bildet.

14. Zusatzprodukt (60) für ein System (100) nach einem der Ansprüche 1 bis 10, umfassend das erste Haftelement (30) mit der Haftschicht (31) und der auf der Haftschicht (31) angeordneten Deckschicht (32),
wobei die Deckschicht (32) dazu gestaltet ist, die Haftfestigkeit der Haftschicht (31) zu senken, sodass das erste Haftelement (30) im Allgemeinen nicht klebrig ist, und
wobei das erste Haftelement (30) dazu gestaltet ist, speziell an einer Ablöseschicht (41) des zweiten Haftelements (40) zu haften.

## Revendications

1. Système (100), comprenant un contenant (50) pour un produit associé au tabac et un produit complémentaire (60),
où le contenant (50) pour un produit associé au tabac comprend
au moins un compartiment de stockage (10) pour le stockage du produit associé au tabac ;
au moins un élément de fermeture (20) permettant un accès contrôlé au compartiment de stockage (20) ; et
un premier élément adhésif (30) ou un deuxième élément adhésif (40),
où le produit complémentaire (60) comprend l'autre élément, entre le premier élément adhésif (30) et le deuxième élément adhésif (40),
où le premier élément adhésif (30) comprend une couche adhésive (31) et une couche de couverture (32) disposée sur la couche adhésive (32) et prévue pour diminuer le pouvoir adhésif de la couche adhésive (31) de manière à rendre le premier élément adhésif (30) sensiblement non collant,
où le deuxième élément adhésif (40) comprend une couche antiadhésive (41), et
où le premier élément adhésif (30) est prévu pour adhérer spécifiquement à la couche antiadhésive (41) du deuxième élément adhésif (40).

2. Système (100) selon la revendication 1, où le contenant (50) est une blague à tabac (90) et où le produit complémentaire (60) est un carnet de papier à cigarettes (61).

3. Système (100) selon la revendication 1, où le contenant (50) est un paquet à couvercle rabattable (70) et/ou un paquet souple pour articles de fumeur longiformes (73), et où le produit complémentaire (60) est un briquet ou une pochette d'allumettes.

4. Système (100) selon la revendication 1, où le contenant (50) est une boîte (80) pour un produit à base de tabac et où le produit complémentaire (60) comprend un indicateur de température prévu pour subir un changement de couleur visible dans une plage de température comprise entre 0 °C et 10 °C, pour délivrer une information sur une condition de consommation préférentielle du produit à base de tabac.

5. Système (100) selon la revendication 1, où le contenant (50) est un paquet à couvercle rabattable (70) pour articles de fumeur longiformes (73), un paquet souple pour articles de fumeur longiformes (70), une boîte (80) pour un produit à base de tabac, et une blague (90) à tabac.

6. Système (100) selon l'une des revendications précédentes, où le produit complémentaire (60) est un carnet comprenant des informations pour un client.

7. Système (100) selon l'une des revendications précédentes, où la couche adhésive (31) comprend un adhésif à base de silicone et/ou où la couche de couverture (32) comprend un vernis à base de polymère.

8. Système (100) selon l'une des revendications précédentes, où le premier élément adhésif (30) et/ou le deuxième élément adhésif (40) comprennent une couche de base (33, 42) avec une première surface principale et une deuxième surface principale opposée à la première surface principale, où un adhésif permanent (34, 43) est disposé sur la deuxième surface principale et où la couche adhésive (31) et/ou la couche antiadhésive (41) sont disposées sur la première surface principale.

9. Système (100) selon l'une des revendications précédentes, où le premier élément adhésif (30) et/ou le deuxième élément adhésif (40) sont fixés au contenant (50).

10. Système (100) selon l'une des revendications précédentes, où le premier élément adhésif (30) et/ou le deuxième élément adhésif (40) sont partie intégrante du contenant (50).

11. Système (100) selon l'une des revendications précédentes, où le contenant (50) est un paquet à couvercle rabattable (70) ou un paquet souple pour articles de fumeur longiformes (73), où le contenant (50) comprend un revêtement intérieur (72) disposé à l'intérieur du contenant (50), et où le premier élément adhésif (30) et/ou le deuxième élément adhésif (40) sont fixés au revêtement intérieur (72), ou intégrés à celui-ci.

12. Contenant (50) pour un système selon l'une des revendications 1 à 11, comprenant ledit au moins un compartiment de stockage (10) destiné à stocker le produit associé au tabac ;
ledit au moins un élément de fermeture (20) permettant un accès contrôlé au compartiment de stockage (10) ; et
le premier élément adhésif (30) pourvu de la couche adhésive (31) et de la couche de couverture (32) disposée sur la couche adhésive (31),
où la couche de couverture (32) est prévue pour diminuer le pouvoir adhésif de la couche adhésive (31) de manière à rendre le premier élément adhésif (30) sensiblement non collant, et
où le premier élément adhésif (30) est prévu pour adhérer spécifiquement à une couche antiadhésive (41) du deuxième élément adhésif (40).

13. Contenant (50) selon la revendication 12,
comprenant en outre le deuxième élément adhésif (40),
où soit le premier élément adhésif (30), soit le deuxième élément adhésif (40) est fixé ou intégré à l'élément de fermeture (20) et où l'autre élément, entre le premier élément adhésif (30) et le deuxième élément adhésif (40), constitue zone de réception (45) pour l'élément de fermeture (20).

14. Produit complémentaire (60) pour un système (100) selon l'une des revendications 1 à 10, comprenant le premier élément adhésif (30) pourvu de la couche adhésive (31) et de la couche de couverture (32) disposée sur la couche adhésive (31),
où la couche de couverture (32) est prévue pour diminuer le pouvoir adhésif de la couche adhésive (31) de manière à rendre le premier élément adhésif (30) sensiblement non collant, et où le premier élément adhésif (30) est prévu pour adhérer spécifiquement à la couche antiadhésive (41) du deuxième élément adhésif (40).
